(19)

Europäisches
Patentamt
European
Patent Office
Office européen
des brevets

(11) **EP 3 343 971 A1**

(12) **EUROPEAN PATENT APPLICATION**

(43) Date of publication:
**04.07.2018 Bulletin 2018/27**

(21) Application number: **16206949.6**

(22) Date of filing: **27.12.2016**

(51) Int Cl.:
**H04W 16/14** (2009.01)    *H04W 24/02* (2009.01)
**H04W 74/08** (2009.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **Intel IP Corporation
Santa Clara, CA 95054 (US)**

(72) Inventors:
• **DREWES, Christian
82110 Germering (DE)**
• **KARLS, Ingolf
85622 Feldkirchen (DE)**
• **MUECK, Markus Dominik
85579 Neubiberg (DE)**

• **JUNG, Peter
47057 Duisburg (DE)**
• **YOUSSEF, Ziad
47057 Duisburg (DE)**
• **BRUCK, Guido
46562 Voerde (DE)**
• **MAJEED, Erfan
47059 Duisburg (DE)**

(74) Representative: **Viering, Jentschura & Partner
mbB
Patent- und Rechtsanwälte
Am Brauhaus 8
01099 Dresden (DE)**

Remarks:
Amended claims in accordance with Rule 137(2)
EPC.

(54) **NETWORK CONTROLLER, RADIO ACCESS NODE, METHOD FOR CONTROLLING A RADIO
COMMUNICATION NETWORK AND METHOD FOR PROVIDING RADIO ACCESS**

(57)    A network controller is described comprising a signaling circuit configured to indicate to a plurality of radio access nodes the communication channels that may be used by the plurality of radio access nodes to provide radio access based on a contention-based radio access technology and a determiner configured to determine one or more optimization parameters for radio communication optimization wherein the signaling circuit is configured to signal the one or more optimization parameters to the plurality of radio access nodes and to request each radio access node to perform a radio communication optimization procedure based on the one or more optimization parameters.

**FIG 8**

**Description**

**Technical Field**

Embodiments described herein generally relate to network controllers, radio access nodes, methods for controlling a radio communication network and methods for providing radio access.

**Background**

SAS (Spectrum Access System) based spectrum sharing in 3.5 GHz has been introduced by the FCC (Federal Communications Commission). In this context, a central SAS (Spectrum Access System) controller is introduced with which all CBSDs (citizens' broadband radio service devices e.g. base stations, small cells, access points, etc.) need to establish a context. This central SAS controller is mainly used for incumbent protection and long-term spectrum allocation. Approaches which allow efficient usage of radio communication resources in such a scenario are desirable.

**Brief Description of the Drawings**

In the drawings, like reference characters generally refer to the same parts throughout the different views. The drawings are not necessarily to scale, emphasis instead generally being placed upon illustrating the principles of the invention. In the following description, various aspects are described with reference to the following drawings, in which:

Figure 1    shows a communication system having the FCC Spectrum Access System (SAS) Architecture.
Figure 2    illustrates the MAC (Medium Access Control) scheme of I EEE 802.11.
Figure 3    illustrates Licensed Assisted Access (LAA).
Figure 4    illustrates the interaction between a SAS and two CBSDs.
Figure 5    illustrates several (geographic) reward regions defined dependent on the spatial distribution of CBSDs.
Figure 6    shows Voronoi diagrams.
Figure 7    shows a Markov chain used to model the operation of a backoff time.
Figure 8    shows a network controller.
Figure 9    shows a flow diagram illustrating a method for controlling a radio communication network.
Figure 10    shows an example for a radio access node.
Figure 11    shows a flow diagram illustrating a method for providing radio access.

**Description of Embodiments**

The following detailed description refers to the accompanying drawings that show, by way of illustration, specific details and aspects of this disclosure in which the invention may be practiced. Other aspects may be utilized and structural, logical, and electrical changes may be made without departing from the scope of the invention. The various aspects of this disclosure are not necessarily mutually exclusive, as some aspects of this disclosure can be combined with one or more other aspects of this disclosure to form new aspects.

The report and order of the FCC (Federal Communications Commission) on 3550-3700 MHz spectrum access system (SAS) based spectrum sharing addresses firstly the need for a hybrid centralized/distributed channel access scheme for the incumbent applications and other systems. A SAS based spectrum sharing is defined to ensure a harmonized coordination of the spectrum between the incumbent applications and other licensed and unlicensed users. The aim of the SAS is to support end users by determining the available frequencies at a given geographic location.

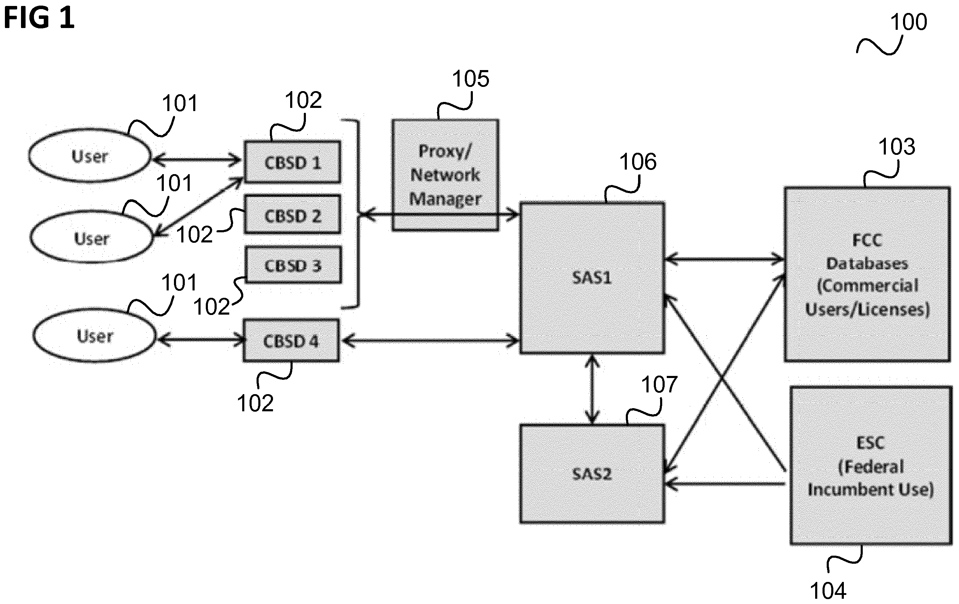

Figure 1 shows a communication system 100 having the FCC Spectrum Access System (SAS) Architecture.

The communication system 100 comprises a plurality of user terminals 101, e.g. subscriber terminals such as user equipments (UEs), which are served by citizens' broadband radio service devices (CBSDs) 102, i.e. radio access nodes such as base stations, e.g. NodeBs or eNodeBs, small cells or access points. The CBSDs 102 assign to the end users, i.e. their user terminals 101, the available frequencies to promote efficient and flexible use of the spectrum access. These data are used to design a centralized long-term cycle time information flow from SAS entities to CBSDs 102.

According to SAS, there are three levels of user priorities:

i) Tier 1 users (Incumbents) have priority over all other Tiers,

ii) Tier 2 users (Priority Access License (PAL) users) have priority over Tier 3 users in PAL bands, they need to acquire usage rights for these bands through auctioning and

iii) Tier 3 users (General Authorized Access (GAA) users) have the lowest level of priority.

PALs are typically are building on licensed band technologies with an additional feature to interact with the SAS node. Still, a unlicensed band system could theoretically also be employed with the additional feature to interact with the SAS node. The candidates for such a licensed band or unlicensed band system or technology are as follows include but are not limited to: a Global System for Mobile Communications (GSM) radio communication technology, a General Packet Radio Service (GPRS) radio communication technology, an Enhanced Data Rates for GSM Evolution (EDGE) radio communication technology, and/or a Third Generation Partnership Project (3GPP) radio communication technology, for example Universal Mobile Telecommunications System (UMTS), Freedom of Multimedia Access (FOMA), 3GPP Long Term Evolution (LTE), 3GPP Long Term Evolution Advanced (LTE Advanced), Code division multiple access 2000 (CDMA2000), Cellular Digital Packet Data (CDPD), Mobitex, Third Generation (3G), Circuit Switched Data (CSD), High-Speed Circuit-Switched Data (HSCSD), Universal Mobile Telecommunications System (Third Generation) (UMTS (3G)), Wideband Code Division Multiple Access (Universal Mobile Telecommunications System) (W-CDMA (UMTS)), High Speed Packet Access (HSPA), High-Speed Downlink Packet Access (HSDPA), High-Speed Uplink Packet Access (HSUPA), High Speed Packet Access Plus (HSPA+), Universal Mobile Telecommunications System-Time-Division Duplex (UMTS-TDD), Time Division-Code Division Multiple Access (TD-CDMA), Time Division-Synchronous Code Division Multiple Access (TD-CDMA), 3rd Generation Partnership Project Release 8 (Pre-4th Generation) (3GPP Rel. 8 (Pre-4G)), 3GPP Rel. 9 (3rd Generation Partnership Project Release 9), 3GPP Rel. 10 (3rd Generation Partnership Project Release 10), 3GPP Rel. 11 (3rd Generation Partnership Project Release 11), 3GPP Rel. 12 (3rd Generation Partnership Project Release 12), 3GPP Rel. 13 (3rd Generation Partnership Project Release 13), 3GPP Rel. 14 (3rd Generation Partnership Project Release 14), 3GPP Rel. 15 (3rd Generation Partnership Project Release 15), 3GPP Rel. 16 (3rd Generation Partnership Project Release 16), 3GPP Rel. 17 (3rd Generation Partnership Project Release 17), 3GPP Rel. 18 (3rd Generation Partnership Project Release 18), 3GPP 5G, 3GPP LTE Extra, LTE-Advanced Pro, LTE Licensed-Assisted Access (LAA), MuLTEfire, UMTS Terrestrial Radio Access (UTRA), Evolved UMTS Terrestrial Radio Access (E-UTRA), Long Term Evolution Advanced (4th Generation) (LTE Advanced (4G)), cdmaOne (2G), Code division multiple access 2000 (Third generation) (CDMA2000 (3G)), Evolution-Data Optimized or Evolution-Data Only (EV-DO), Advanced Mobile Phone System (1st Generation) (AMPS (1G)), Total Access Communication System/Extended Total Access Communication System (TACS/ETACS), Digital AMPS (2nd Generation) (D-AMPS (2G)), Push-to-talk (PTT), Mobile Telephone System (MTS), Improved Mobile Telephone System (IMTS), Advanced Mobile Telephone System (AMTS), OLT (Norwegian for Offentlig Landmobil Telefoni, Public Land Mobile Telephony), MTD (Swedish abbreviation for Mobiltelefonisystem D, or Mobile telephony system D), Public Automated Land Mobile (Autotel/PALM), ARP (Finnish for Autoradiopuhelin, "car radio phone"), NMT (Nordic Mobile Telephony), High capacity version of NTT (Nippon Telegraph and Telephone) (Hicap), Cellular Digital Packet Data (CDPD), Mobitex, DataTAC, Integrated Digital Enhanced Network (iDEN), Personal Digital Cellular (PDC), Circuit Switched Data (CSD), Personal Handy-phone System (PHS), Wideband Integrated Digital Enhanced Network (WiDEN), iBurst, Unlicensed Mobile Access (UMA), also referred to as also referred to as 3GPP Generic Access Network, or GAN standard), Zigbee, Bluetooth®, Wireless Gigabit Alliance (WiGig) standard, mmWave standards in general (wireless systems operating at 10-300 GHz and above such as WiGig, I EEE 802.11 ad, IEEE 802.11ay, etc.), technologies operating above 300 GHz and THz bands, (3GPP/LTE based or I EEE 802.11p and other) Vehicle-to-Vehicle (V2V) and Vehicle-to-X (V2X) communication technologies, DSRC (Dedicated Short Range Communications) communication systems such as Intelligent-Transport-Systems and others, etc.

An FCC database 103 provides information about registered or licensed commercial users in a band.

An ESC (Environmental Sensing Capability) 104 provides information about incumbents of a band. Through a proxy (network manager) 105 SAS controllers 106, 107 interact with information derived from the FCC database 103 and the ESC 104 with CBSDs 102 in a direct or indirect way. This ensures that CBRS users operate in a consistent manner with their authorizations. The SAS controllers 106, 107 can verify the efficient utilization of the band. The end user devices 101 controlled by an authorized CBSD 102 have the capability to communicate with a CBSD 102. CBSDs 102 are e.g. access points which allow the communication/coordination with a SAS controller 106, 107 and the end users respectively. On the CBSD side a distributed channel access with different technologies is used.

For example, CSMA/CA (Carrier Sense Multiple Access/Collision Avoidance) is used as access protocol for SAS Tier 3 users. This allows the usage of systems such as WiFi, LAA (licensed assisted access) and MuLTEfire (which may be modified to be able to connect to the central SAS entity).

In the following, some background on CSMA/CA principles is given.

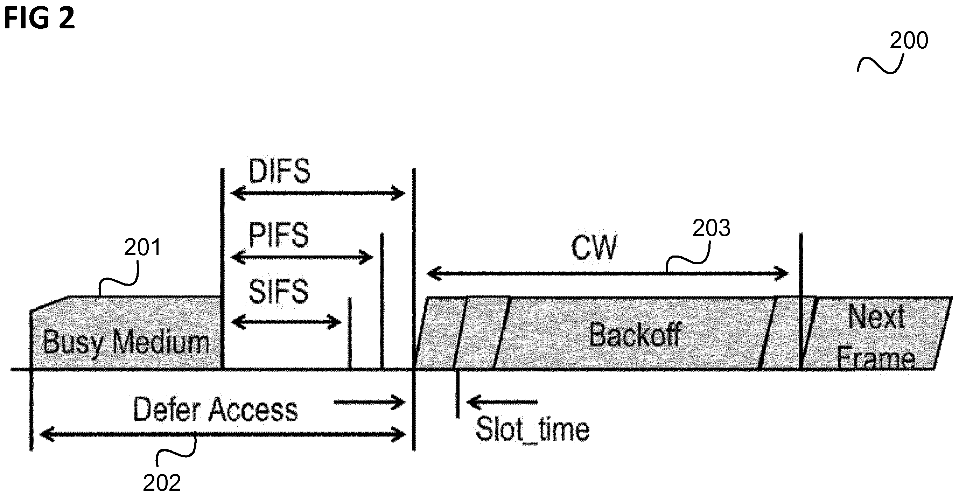

Figure 2 illustrates the MAC (Medium Access Control) scheme of I EEE 802.11.

When a communication terminal accesses the medium (e.g. channel) and the medium is busy 201 the communication terminal accessing the medium defers access 202 for a predetermined time, the distributed coordination function interframe spacing (DIFS) and a random time.

Besides the DI FS, there are the shorter waiting times specification short interframe spacing (SIFS), which is used for atomic exchanges and point coordination function interframe spacing (PIFS) for prioritized access.

After having waited, the communication terminal checks whether the medium is occupied or whether it may send. If the medium is occupied, the communication terminal backs off from the medium for a random time selected within the range of a contention window 203. The size of the contention window is doubled for a communication terminal for each collision. The contention window is a significant parameter to change the access priority and channel efficiency.

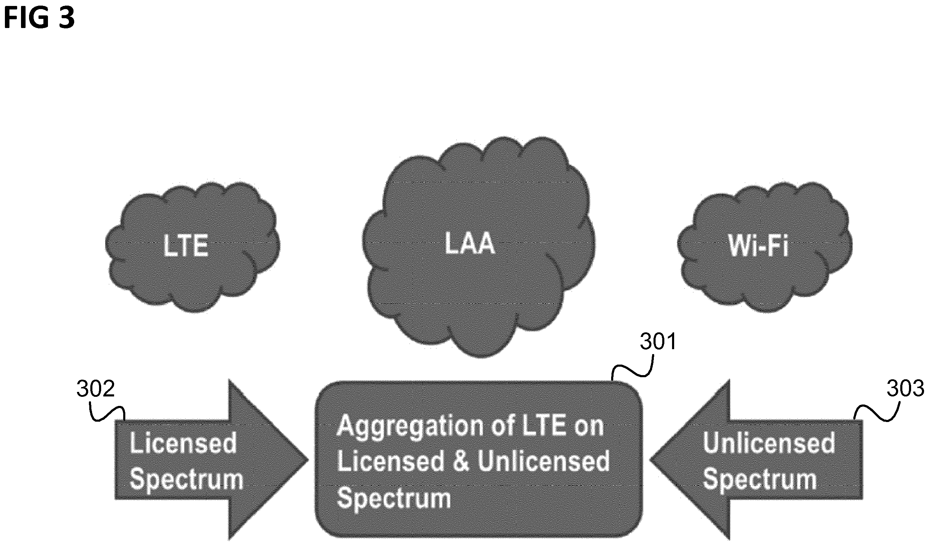

Figure 3 illustrates Licensed Assisted Access (LAA).

LAA may be applied to provide the need of increasing data rates and is based on the method of carrier aggregation 301 of LTE licensed spectrum 302 and unlicensed spectrum 303. Typically, LTE licensed spectrum 302 is used for performance and unlicensed spectrum 303 is used for data rate boost.

The success of LAA depends heavily on the fair coexistence characteristics of the unlicensed band. Therefore LAA should not impact IEEE 802.11 services more than an additional IEEE 802.11 network on the same carrier.

The distributed decision making mechanisms of I EEE 802.11 MAC as well as licensed assisted access (LAA) and listen before talk (LBT) may be used as a basis for the channel and power allocation of the hybrid centralized/distributed channel access scheme using SAS entities which allow the SAS to assign the allowed channels to the CBSDs and determine the authorization.

In the following, approaches are described to allow the SAS central control entity (which is to be introduced as requested by the FCC), e.g. one or both of SAS controllers 106, 107, e.g. in 3.5 GHz, to achieve better MAC access efficiency. Specifically, according to various embodiments, these approaches may include

- iterative interference management
- CBSD output power level and channel allocation optimization using the spatial distribution of the CBSDs
- Markov based derivation of Optimum Contention Window parameters for CSMA/CA.

In particular, algorithmic descriptions for obtaining an optimum configuration are given. The final configuration choices can then be executed through the SAS-CBSD interface, e.g. as defined by the Wireless Innovation Forum.

The application of the approaches described in the following on a user terminal 101 may depend on the user priority (Tier) of the user terminal, for example:

1) For Tier 2 and Tier 3 users: Iteratively estimate interference across census tracts and reallocate resources across selected census tracts following an iterative model.

2) For Tier 2 and Tier 3 users: Optimization of 1) by exploiting additionally knowledge on the spatial distribution of the CBSDs.

3) For Tier 3 users: Derive Optimum Contention Window parameters for the CSMA/CA protocol of SAS (such as WiFi, MuLTEfire, LAA, etc.).

These approaches are described in the following.

1) Usage of an iterative model for determining optimum allowed channels and interference thresholds which can be allocated to CBSDs by the SAS entity.

According to this approach, a hybrid centralized/distributed channel access scheme to be used for spectrum access systems (SAS) based spectrum sharing is provided. This includes the design of a hybrid centralized/distributed channel access scheme to be used for spectrum access system based efficient spectrum sharing. The design aims to promote spectrum sharing in an efficient way. The system introduces a central control entity (e.g. a SAS 106, 107) which assists distributed decision making algorithms in a minimum intrusive way. The SAS 106, 107 plays a key role in the hybrid centralized/distributed channel scheme, because it has the data about the incumbent and PAL systems (e.g. from FCC database 103 and ESC 104).

The SAS 106, 107 firstly accommodates and provides data over space, time and frequency for which the systems (i.e. the various radio communication systems using the related frequency band) are in operation. Secondly it manages the incumbent and PAL protection and CBSD channel assignment.

There are issues to avoid suboptimal channel allocation to CBSDs 101 to guarantee low latency between SAS and CBSDs communication to keep data control traffic between the SAS 106, 107 and CBSDs 102 as well as data about the using channels in the CBSDs 102 (public allocation information) at a minimum. The SAS 106, 107 assigns the allowed channels to the CBSDs 102. The CBSDs 102 return a feedback to the SAS 106, 107 to verify the functionality. The feedback may be built in an abstract manner to prevent the revealing of system information. Moreover, the interference between the CBSDs and their nodes is mitigated through efficient spectrum management while the necessary control data exchange with the SAS is kept at a minimum.

According to the present approach, reinforcement may be used for modeling the SAS and CBSDs interaction and to learn the optimal policy to optimize the spectrum utilization and interference mitigation under the CBSDs and to keep control data exchange to a minimum.

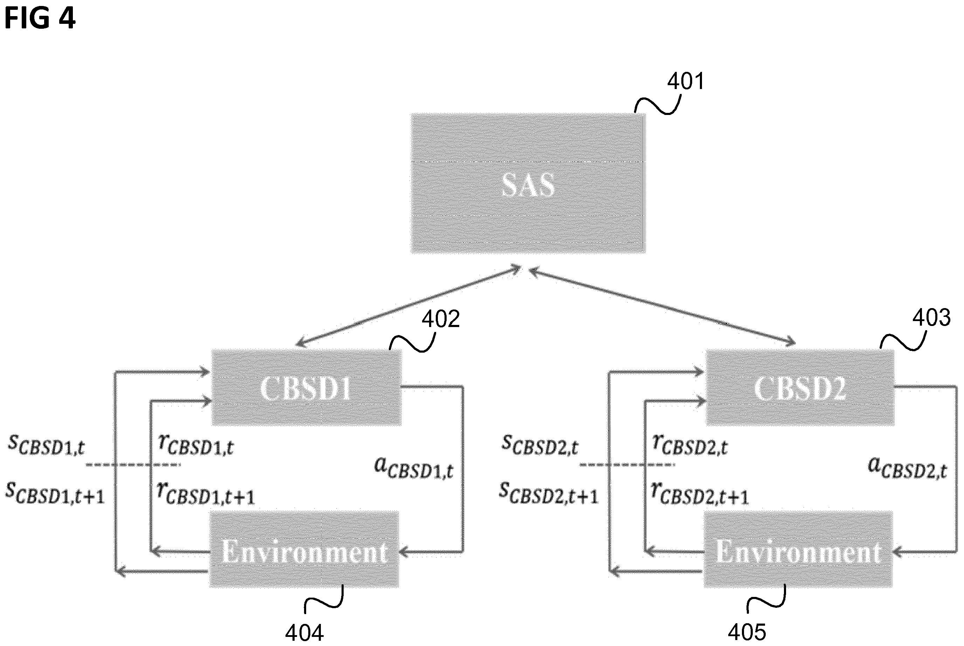

Figure 4 illustrates the interaction between the SAS 401 (e.g. corresponding to one of the SASs 106, 107) and CBSDs 402, 403 (e.g. corresponding to two of the CBSDs 102) and the respective radio environments 404, 405.

The SAS 401 acts as a central unit (e.g. central controller). Each CBSD 402, 403 follows a learning process to learn its respective radio environment 404, 406 which allows an adaptive allocation depending on network and user demands.

The SAS 401 assigns the allowed channels and interference thresholds ($ICI_0$, $ICI_1$, $ICI_2$, $ICI_3$, $ICI_4$, $ICI_5$ in the following example) to the CBSDs 402, 403. Each CBSD 402, 403 then uses reinforcement to learn the respective radio environment 404, 405 of the allowed channels.

For example, the CBDS 402, 403 starts with state $s_t$ of a set of states S and performs an action $a_t$ of a set of actions $A_{s_t}$, where action a contains the parameters transmission power and channel (e.g. channel ID). The radio environment 404, 405 responds with a state $s_{t+1} \in S$ after performing the action.

Through the response (e.g. the interference experienced after performing the action), the CBSD 402, 403 evaluates the action, i.e. calculates a reward from the resulting interference value as follows:

$$r_{t+1} = \begin{cases} 1 & if \quad ICI_0 \leq ICI_{t+1} \leq ICI_1 \\ 0.5 & if \quad ICI_2 < ICI_{t+1} \leq ICI_3 \\ -1 & if \quad ICI_4 < ICI_{t+1} \leq ICI_5 \end{cases}$$

The reward shows the utility and success of the action. In the next step, the CBSD 402, 403 estimates an action to maximize the reward in the future. It follows the goal to find an optimal policy $\pi^*$ to maximize an action-value function Q:

$$\pi^* = Q^*(s, a, r(I)) = \max_{\pi} Q^{\pi}(s, a, r(I)) \forall s \in S, a \in A_s$$

The action-value function Q specifies the long-term value of an action. The above maximization formulates the goal of finding the action with the best value (or gain). Since the radio environment 404, 405 of the CBSD 402, 403 is (at first) unknown, the CBSD 402, 403 has to learn the radio environment 404, 405 in course of the optimization. This happens by an iterative process.

For example, the CBSD 402, 403 performs an optimization algorithm employing Q-learning which includes

1) Selection of an action a for time t-1 (based on a predetermined strategy, e.g. randomly)
2) Obtaining the reward r at time t and the new state s of the radio environment
3) Adjust Q(t) according to

$$Q_t(a) = \overbrace{Q_{t-1}(a)}^{old\ value} + \alpha \underbrace{\left[ r_t(a) - Q_{t-1}(a) \right]}_{error\ estimation}$$

The error estimation specifies the adjustment and $\alpha$ is the learning rate, i.e. the speed at which die value of Q is supposed to change.

As an example, it is assumed that there are channels 0, 3, 4 and 5 and possible transmission powers 0 and 1 with the rewards as given in table 1.

Table 1

|  | C0 | C3 | C4 | C5 |
|---|---|---|---|---|
| Power Level 0 | 0.5 | -1 | -1 | 0.5 |
| Power Level 1 | -1 | 0.5 | -1 | + 1 |

Then, the optimization process for example proceeds as follows (wherein for each iteration, a table illustrates the evolution of Q):

Iteration 1:

Action a: ($C_0$, $P_0$)

$$Q_t(a(C_0, P_0)) = Q_{t-1}(a(C_0, P_0)) + 0.5[r_t - Q_{t-1}(a(C_0, P_0))] = 0 + 0.5[0.5-0] = 0.25$$

|  | $a_t$ | $Q_t$ |
|---|---|---|
| → | $C_{0,0}$ | 0.25 |
|  | $C_{0,1}$ | 0 |
|  | $C_{3,0}$ | 0 |
|  | $C_{3,1}$ | 0 |
|  | $C_{4,0}$ | 0 |
|  | $C_{4,1}$ | 0 |
|  | $C_{5,0}$ | 0 |
|  | $C_{5,1}$ | 0 |

Iteration 2:
Action a: $(C_3, P_0)$

$$Q_t(a(C_3, P_0)) = Q_{t-1}(a(C_3, P_0)) + 0.5[r_t - Q_{t-1}(a(C_3, P_0))] = 0 + 0.5[-1-0] = -0.5$$

|  | $a_t$ | $Q_t$ |
|---|---|---|
|  | $C_{0,0}$ | 0.25 |
|  | $C_{0,1}$ | 0 |
| → | $C_{3,0}$ | -0.5 |
|  | $C_{3,1}$ | 0 |
|  | $C_{4,0}$ | 0 |
|  | $C_{4,1}$ | 0 |
|  | $C_{5,0}$ | 0 |
|  | $C_{5,1}$ | 0 |

Iteration 3:
Action a: $(C_5, P_0)$

$$Q_t(a(C_5, P_0)) = Q_{t-1}(a(C_5, P_0)) + 0.5[r_t - Q_{t-1}(a(C_5, P_0))] = 0 + 0.5[0.5-0] = 0.25$$

|  | $a_t$ | $Q_t$ |
|---|---|---|
|  | $C_{0,0}$ | 0.25 |
|  | $C_{0,1}$ | 0 |
|  | $C_{3,0}$ | -0.5 |
|  | $C_{3,1}$ | 0 |
|  | $C_{4,0}$ | 0 |

(continued)

|  | $a_t$ | $Q_t$ |
|---|---|---|
|  | $C_{4,1}$ | 0 |
| $\rightarrow$ | $C_{5,0}$ | 0.25 |
|  | $C_{5,1}$ | 0 |

Iteration 4:
Action a: $(C_3, P_1)$

$$Q_t(a(C_3, P_1)) = Q_{t-1}(a(C_3, P_1)) + 0.5[r_t - Q_{t-1}(a(C_3, P_1))] = 0 + 0.5 [0.5 - 0] = 0.25$$

|  | $a_t$ | $Q_t$ |
|---|---|---|
|  | $C_{0,0}$ | 0.25 |
|  | $C_{0,1}$ | 0 |
|  | $C_{3,0}$ | -0.5 |
| $\rightarrow$ | $C_{3,1}$ | 0.25 |
|  | $C_{4,0}$ | 0 |
|  | $C_{4,1}$ | 0 |
|  | $C_{5,0}$ | 0.25 |
|  | $C_{5,1}$ | 0 |

Iteration 5:
Action a: $(C_0, P_0)$

$$Q_t(a(C_0, P_0)) = Q_{t-1}(a(C_0, P_0)) + 0.5[r_t - Q_{t-1}(a(C_0, P_0))] = 0.25 + 0.5 [0.5 - 0.25] = 0.375$$

|  | $a_t$ | $Q_t$ |
|---|---|---|
| $\rightarrow$ | $C_{0,0}$ | 0.375 |
|  | $C_{0,1}$ | 0 |
|  | $C_{3,0}$ | -0.5 |
|  | $C_{3,1}$ | 0.25 |
|  | $C_{4,0}$ | 0 |
|  | $C_{4,1}$ | 0 |
|  | $C_{5,0}$ | 0.25 |
|  | $C_{5,1}$ | 0 |

Iteration 6:
Action a: $(C_3, P_1)$

$$Q_t(a(C_3, P_1)) = Q_{t-1}(a(C_3, P_1)) + 0.5[r_t - Q_{t-1}(a(C_3, P_1))] = 0.25 + 0.5 [0.5 - 0.25] = 0.375$$

|  | $a_t$ | $Q_t$ |
|---|---|---|
| $\rightarrow$ | $C_{0,0}$ | 0.375 |
|  | $C_{0,1}$ | 0 |
|  | $C_{3,0}$ | -0.5 |
|  | $C_{3,1}$ | 0.375 |
|  | $C_{4,0}$ | 0 |
|  | $C_{4,1}$ | 0 |
|  | $C_{5,0}$ | 0.25 |
|  | $C_{5,1}$ | 0 |

Iteration 7:
Action a: $(C_5, P_1)$

$$Q_t(a(C_5, P_1)) = Q_{t-1}(a(C_5, P_1)) + 0.5[r_t - Q_{t-1}(a(C_5, P_1))] = 0 + 0.5[1-0] = 0.5$$

|  | $a_t$ | $Q_t$ |
|---|---|---|
| $\rightarrow$ | $C_{0,0}$ | 0.375 |
|  | $C_{0,1}$ | 0 |
|  | $C_{3,0}$ | -0.5 |
|  | $C_{3,1}$ | 0.375 |
|  | $C_{4,0}$ | 0 |
|  | $C_{4,1}$ | 0 |
|  | $C_{5,0}$ | 0.25 |
|  | $C_{5,1}$ | 0.5 |

Since in this example channel C5 with power level 1 gives the best reward, the entry (C5, P1) will dominate after some iterations and determine the stationary operation of the CBSD.

The CBSD 402, 403 may continue the optimization process until a certain optimization level, i.e. a certain total reward, has been reached, where the required total reward may be controlled by the SAS 401. The optimization process can be controlled through the SAS 401, e.g. by means of predefined intervals of total reward. The CBSD 402, 403 may also use the resulting reward to report the result to the SAS 401 in an abstract fashion. Thus, through the reward, the SAS 401 becomes a feedback about the operation without knowing the chosen channel and power.

The SAS 401 can also check whether the CBSDs 402, 403 achieve a desired reward as result of the optimization process. For example, if a CBSDs 402, 403 achieves a reward that is not satisfactory (e.g. is below a predetermined threshold) the SAS 401 may assign channels differently between the CBSDs 402, 403. In this, the SAS 401 may take requirements of the services offered by the CBSDs 402, 403 into account. If for example, one CBSD provides only simple services (i.e. services with low-requirements, e.g. services with low QoS(Quality of Service) requirements) the SAS 401 may remove channels from this CBSD or accept that this CBSD achieves a lower reward.

2) CBSD output power level and channel allocation scheme using the spatial distribution of the CBSDs

According to this approach, an iterative model for determining optimum allowed CBSD output power levels and channel allocations which can be assigned to CBSDs 402, 403 by the SAS entity 401 in order to achieve an overall optimum system efficiency is used.

As mentioned above the SAS 401 may regulate the CBSDs operation requirements through determining the total reward of each CBSD. Because the SAS 401 controls the reward and the optimization process, the SAS should define several interference intervals dependent on the CBSD distribution. With this modification the system is able to operate in several scenarios according the CBSDs distribution and enhance the optimization process. To take the spatial distribution of the CBDS into account, the SAS 401 uses reward regions. Reward regions give the opportunity to classify an optimization strategy for a certain geographic region, i.e. this allows to determine the interference thresholds in a doable way without trying to achieve an over-optimization which cannot be achieved.

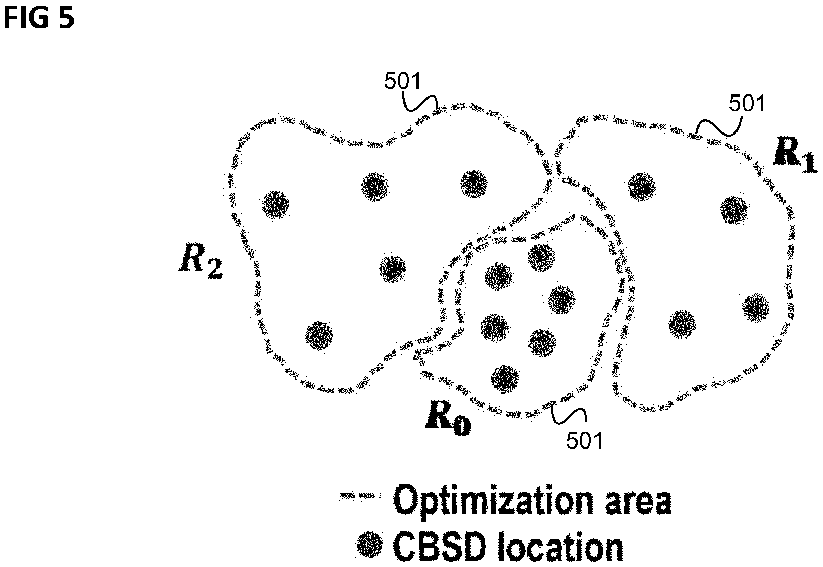

Figure 5 illustrates several (geographic) reward regions defined dependent on the spatial distribution of CBSDs 502.

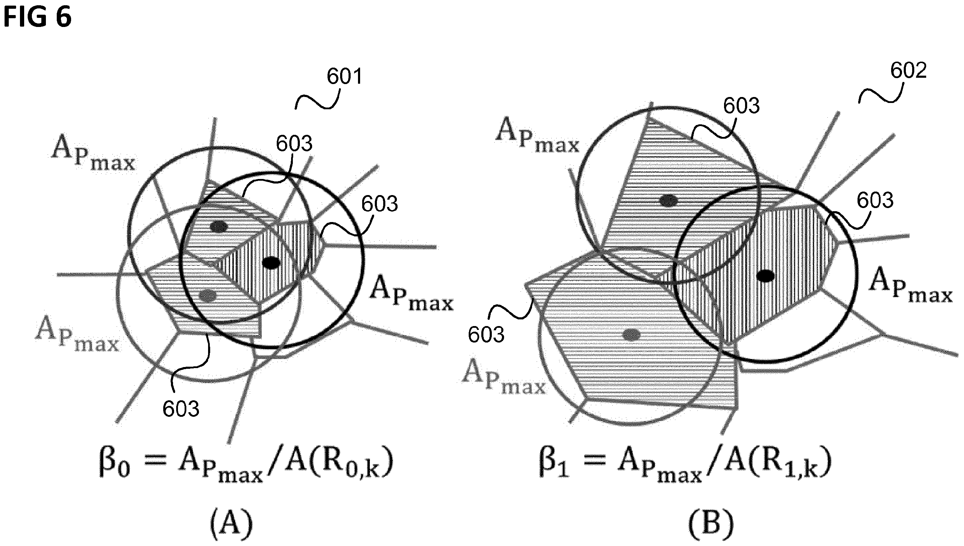

The reward regions 501, denoted as $R_0$, $R_1$ and $R_2$ show different spatial distributions and, corresponding to this, different optimization areas. The regions 501 may for example be determined (e.g. by the SAS 401) by using a Voronoi diagram as illustrated in figure 6.

Figure 6 shows a first Voronoi diagram 601 and a second Voronoi diagram 602.

In this example, each Voronoi diagram 601, 602 includes three Voronoi cells 603.

A benefit of using a Voronoi diagram lies in the fact that every Voronoi cell 603 can be used to obtain the region 501 of a CBSD and each Voronoi cell 603 behaves proportional to the CBSD distribution, i.e. in a closely spaced distribution the Voronoi cells have small areas and vice versa. The clustering process may for example be applied depending on the resulting area as follows:

$$R_i = \begin{cases} R_0 & if & A_0 \leq A_i \leq A_1 \\ R_1 & if & A_1 < A_i \leq A_2 \\ R_2 & if & A_2 < A_i < A_3 \end{cases}$$

In this example, thresholds are used to classify the region, where $R_0$ stands for a high interference region, $R_1$ for a medium interference region and $R_0$ for a low interference region and $A_i$ is the area of the i-th Voronoi cell. The predefined area thresholds are for example obtained from the SAS 401 because the region partitioning and classification of the reward regions are done in the SAS 401. Region $R_2$ contains CBSDs with higher distances to each other, the CBSDs in $R_1$ and $R_2$ for example are closer to each other. The information about the CBSDs distribution and the optimization regions is used (e.g. by the SAS 401) to define the interference thresholds which are needed to obtain the optimization process. To estimate the interference density in a given Voronoi cell, the cell area is used.

Assuming that a CBSD 402, 403 has no competition when operating with the maximum available power $P_{max}$, it will cover an area $A_{P_{max}}$. In this case, within the area $A_{P_{max}}$ there are no interference effects due to the absence of other CBSDs. On the other hand, in presence of other CBSDs there will be interference.

In the present approach it is assumed that the interference increases proportionally to the ratio $\beta = A_{P_{max}}/A(R_{i,k})$, where $A(R_{i,k})$ represents the average area of region $R_i$ which contains the i-th Voronoi cell.

The two Voronoi diagrams 601, 602 illustrate the relationship of area and power within a Voronoi cell.

The present approach can be seen to be based on the idea to compare the coverage of the CBSD maximum power with the size of the respective Voronoi cell. The ratio between the coverage area $A_{P_{max}}$ and the Voronoi cell area $A_{cell}$ provides the information about interference strength, i.e. the smaller the area the higher the interference between the CBSDs. The increasing factor is given by $\beta = AP_{max}/A_{cell}$. If the factor $\beta$ is near to one, the expected interference is low, otherwise the interference will be high proportionally to $\beta$.

Using this approach, the reward gets the following definition:

$$r_i = \begin{cases} 1 & if & \beta_i \cdot ICI_0 \leq ICI_t \leq \beta_i \cdot ICI_1 \\ 0.5 & if & \beta_i \cdot ICI_2 < ICI_t \leq \beta_i \cdot ICI_3 \\ -1 & if & \beta_i \cdot ICI_4 < ICI_t \leq \beta_i \cdot ICI_5 \end{cases}$$

It should be noted that instead of $\beta$ as defined above, $\beta$ may also be the signal-to-noise ratio. In this case $\beta$ is replaced by $1/\beta$ in the above formula.

This means that the smaller the cell the higher the interference and the effect is adapted to the interference thresholds. In this case every CBSD and cell respectfully gets an individual definition of the reward. The requirements of the interference is decreased in case of a high interfered region and it is increased in case of low interfered region. The thresholds of the clustering scheme may for example be selected as

$$A_0 = \frac{1}{10} \cdot AP_{\max}, \quad A_1 = \frac{1}{3} \cdot AP_{\max}, \quad A_2 = \frac{2}{3} \cdot AP_{\max}, \quad A_3 > AP_{\max}$$

3) Markov based derivation of optimum Contention Window parameters for CSMA/CA

According to this approach, instead of using fixed CSMA/CA contention window parameter sets, it is proposed to dynamically change the parameter sets and thus to manage channel access behavior of the Tier 3 users. In the following, it is shown how to derive an instantaneous optimum CSMA/CA contention window parameter set.

The optimization setup is based upon interference mitigation between the CBSDs 402, 403 and their N nodes (e.g. served user terminals) with the SAS and maximizing the channel access efficiency $\eta$ with an optimal contention window W and a certain collision probability $p_c$.

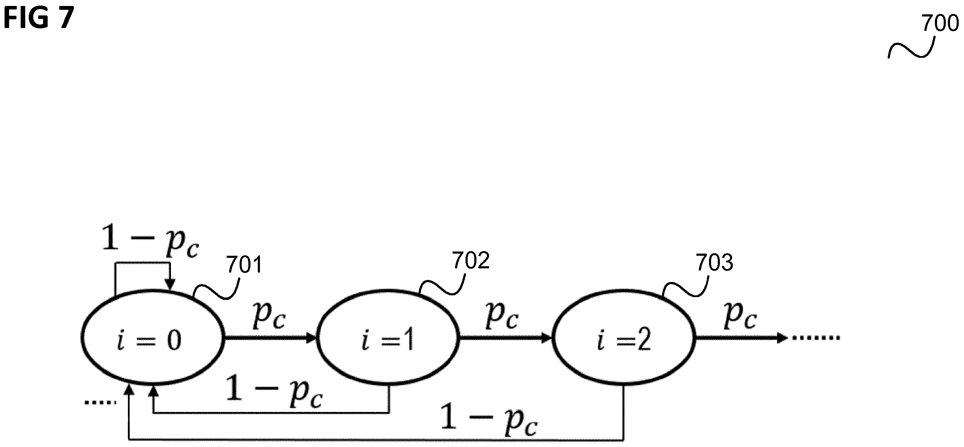

Figure 7 shows a Markov chain 700 used to model the operation of the backoff time.

In a first state 701, a user terminal has not experienced a collision. With a probability of $1 - p_c$, it stays in this state while with a probability of $p_c$ it switches into a second state 702 in which it has experienced one collision. With a probability of $1 - p_c$, it returns to the first state 701 while with a probability of $p_c$ it switches into a third state 703 in which it has experienced two collisions. The chain continues in this fashion wherein the ith state corresponds to the user terminal having experienced i collisions.

The contention window size is defined as follows:

$$W_i = \left\lfloor \alpha^i W_0 \right\rfloor$$

The parameter $\alpha$ determines the contention window size according to the collision counter. Typically, $\alpha$ is set to 2, i.e. at every collision the window size is doubled. In the present approach, however, the Marko chain is extended to a Marko decision process to determine the optimal contention window size depending on the parameter $\alpha$ to fulfil a certain collision probability and to maximize the channel access efficiency. The optimal contention window size and the related parameter is for example obtained (e.g. by SAS 401) by using reinforcement as follows:

$$\pi^W = \max_W Q_\eta(s_\eta, a_\eta(p_c, N))$$

Depending on the state $s_\eta$ which describes the collision in the system and the action $a_\eta$ which selects the parameter $\alpha$ the reward is evaluated as follows:

$$r_\eta = \begin{cases} 1 & \text{if } P_{csys} \leq p_c \\ -1 & \text{if } P_{csys} > p_c \end{cases}$$

where $P_{csys}$ is a predetermined system collision probability.

Depending on the reward, the reinforcement optimization process maximizes the action value function (wherein $Q_\eta$ is for example determined by an update formula as described above). The contention window size is adaptable through the optimization process, i.e. the process adapts the window size depends on the environment changes.

For example, the SAS 401 specifies an average collision rate (such as 0.1) and the CBSD 402, 403 adapts the contention window size (i.e. adapts $\alpha$) such that the actual behavior approximates the specified collision rate.

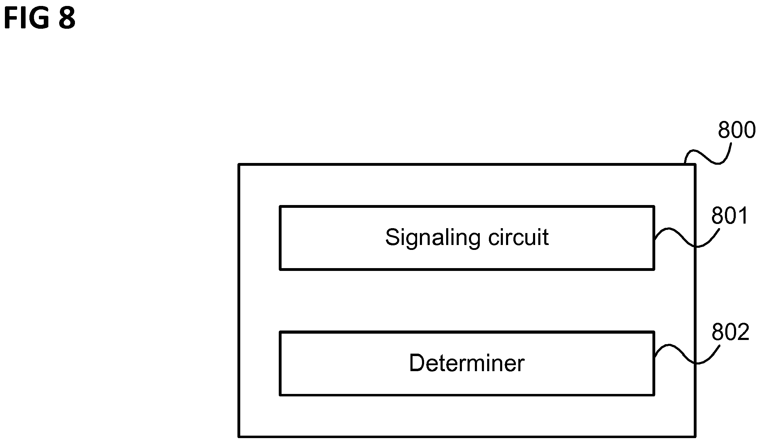

In summary, according to various embodiments, a network controller is provided as illustrated in figure 8.

Figure 8 shows a network controller 800.

The network controller 800 comprises a signaling circuit 801 configured to indicate to a plurality of radio access nodes the communication channels that may be used by the plurality of radio access nodes to provide radio access based on a contention-based radio access technology.

Further, the network controller 800 comprises a determiner 802 configured to determine one or more optimization parameters for radio communication optimization.

The signaling circuit 801 is configured to signal the one or more optimization parameters to the plurality of radio access nodes and to request each radio access node to perform a radio communication optimization procedure based on the one or more optimization parameters.

According to various examples, in other words, a central controller which distributes channels to radio access nodes (each serving user terminals using a contention-based radio access technology) also signals optimization parameters to the radio access nodes based on which the radio access nodes are to optimize radio communication. For example, the optimization parameters give the radio access nodes an indication of the quality of controlling actions (e.g. radio configuration operations such as transmission power selections, i.e. selection of transmission power used by the radio access node to serve a user terminal or assigned to a user terminal for an uplink transmission to the radio access node) they undertake such that they can select the best controlling actions. In particular, the optimization parameters may include information which allows the radio access nodes to judge whether the performance of radio communication they achieve (e.g. in terms of the interference) already has a high level or whether they could still do better, i.e. whether they are already near the optimum or whether it is worth it to continue with the optimization process.

The network controller is for example a SAS controller and the radio access nodes are for example CBSDs. SAS operations include mechanisms based on data to be provided by the CBSDs to the central SAS entity (i.e. a SAS controller) such as CBSD location, resource usage characteristics, output power levels, etc. According to various embodiments, instead of performing a global optimization once and for all based on propagation models, actual system performance measurements are used for the radio communication configuration of the CBSDs and each CBSD performs an radio communication optimization (i.e. a radio communication configuration optimization) based on the measurements. Optimization on the CBSD side (or generally radio access node side) may be implemented with sharing little information with the central network controller (e.g. SAS entity. It should be noted that information sharing with an external entity (such as an SAS entity) is typically a massive problem for cellular operators. Further, the optimization is based on the actual performance of the radio communication (in other words the real system behavior) rather than propagation or behavioral models.

The contention-based radio access technology may for example be a CSMA (Carrier Sense Multiple Access/Collision Avoidance) radio access technology. A basic characteristic of a CSMA system can be seen in that no central controller is present (otherwise, one could do central resource allocation as for LTE). In the SAS context, there is a central controller by definition (required for the SAS incumbent protection). According to various embodiments, the SAS controller is exploited not only for the protection of the incumbent but to parameterize the CSMA access of terminal/AP nodes. Typically, it is not possible (or desirable) to do fine-grained resource allocation because there is not enough bandwidth between the AP/terminals and the SAS central controller. Therefore, according to various embodiments, a low overhead mechanism is realized by the type of parameters (optimization parameters) which are communicated. In other words, according to various embodiments, the SAS controller is reused to configure the CSMA protocol for the current network state.

The approach described above may for example be applied to the 3550-3700 MHz spectrum but may also be applied to other spectrums.

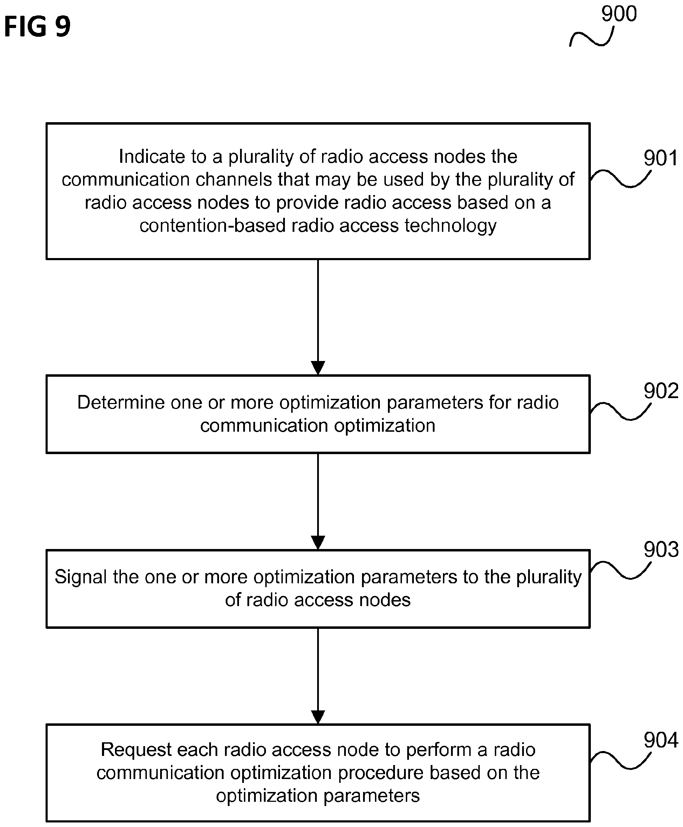

The network controller 800 for example carries out a method as illustrated in figure 9.

Figure 9 shows a flow diagram 900 illustrating a method for controlling a radio communication network, for example performed by a network controller.

In 901, the network controller indicates to a plurality of radio access nodes the communication channels that may be used by the plurality of radio access nodes to provide radio access based on a contention-based radio access technology.

In 902, the network controller determines one or more optimization parameters for radio communication optimization.

In 903, the network controller signals the one or more optimization parameters to the plurality of radio access nodes.

In 904, the network controller requests each radio access node to perform a radio communication optimization procedure based on the optimization parameters.

It should be noted that 901 does not necessarily have to be performed before 902 and 903.

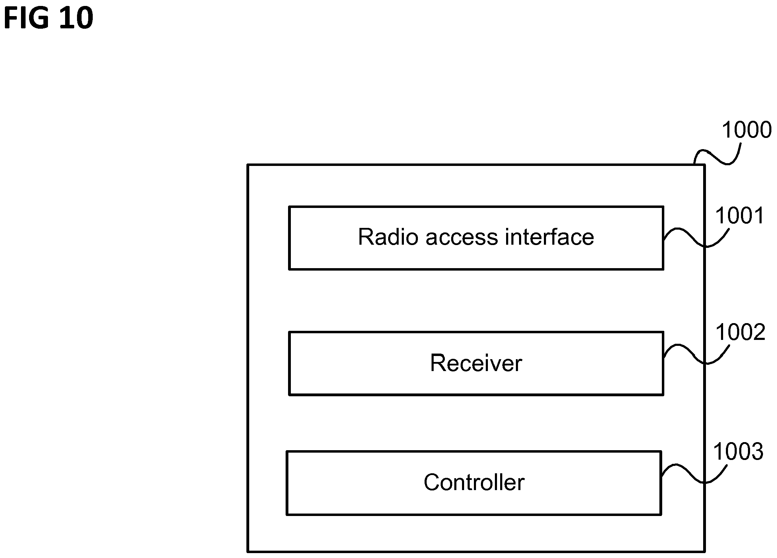

Figure 10 shows an example for a radio access node 1000.

The radio access node 1000 comprises a radio access interface 1001 configured to provide radio access for user terminals using a contention-based radio access technology.

Further, the radio access node 1000 comprises a receiver 1002 configured to receive an indication from a network controller of the communication channels the radio access node may use for providing radio access for the user terminals and configured to receive one or more optimization parameters for radio communication optimization.

The radio access node 1000 further comprises a controller 1003 configured to perform a radio communication optimization procedure based on the one or more optimization parameters.

The radio access interface 1001 is configured to provide radio access for user terminals based on a result of the radio communication optimization procedure.

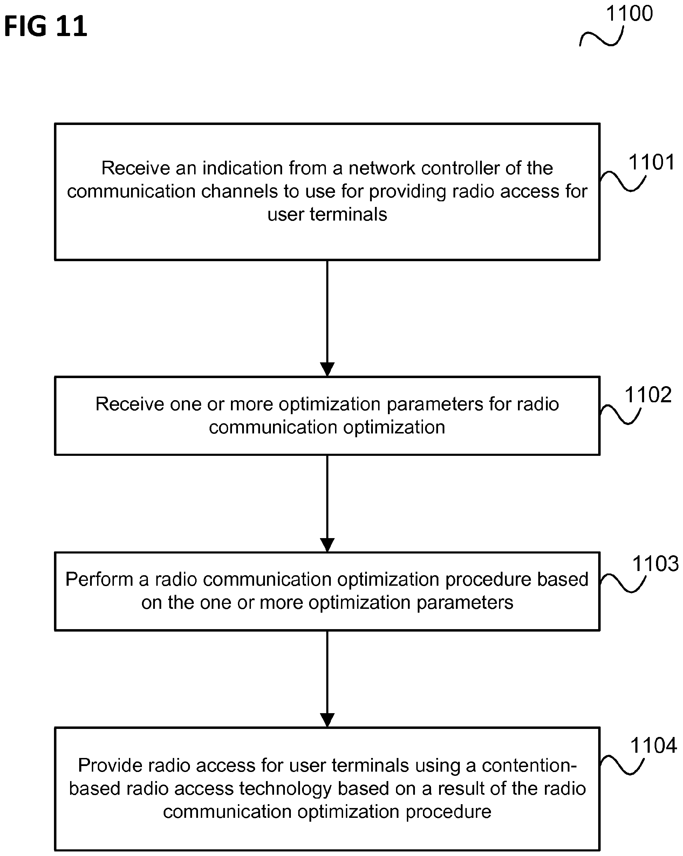

The radio access node 1000 for example carries out a method as illustrated in figure 11.

Figure 11 shows a flow diagram 1100 illustrating a method for providing radio access, for example carried out by a radio access node.

In 1101, the radio access node receives an indication from a network controller of the communication channels to use for providing radio access for user terminals.

In 1102, the radio access node receives one or more optimization parameters for radio communication optimization.

In 1103, the radio access node performs a radio communication optimization procedure based on the one or more optimization parameters.

In 1104, the radio access node provides radio access for user terminals using a contention-based radio access technology based on a result of the radio communication optimization procedure.

The components of the network controller and the radio access node (e.g. the signaling circuit, the determiner, the radio access interface, the receiver and the controller) may for example be implemented by one or more circuits. A "circuit" may be understood as any kind of a logic implementing entity, which may be special purpose circuitry or a processor executing software stored in a memory, firmware, or any combination thereof. Thus a "circuit" may be a hard-wired logic circuit or a programmable logic circuit such as a programmable processor, e.g. a microprocessor. A "circuit" may also be a processor executing software, e.g. any kind of computer program. Any other kind of implementation of the respective functions which will be described in more detail below may also be understood as a "circuit".

The following examples pertain to further embodiments.

Example 1 is a network controller as illustrated in figure 8.

In Example 2, the subject matter of Example 1 may optionally include the radio communication optimization being an optimization of providing radio access based on the contention-based radio access technology.

In Example 3, the subject matter of any one of Examples 1-2 may optionally include the radio communication optimization being a process for setting a radio communication configuration based on radio communication performance measurements.

In Example 4, the subject matter of Example 3 may optionally include the radio communication performance measurements being interference measurements.

In Example 5, the subject matter of any one of Examples 1-4 may optionally include the optimization parameters comprising values for evaluation of a radio communication configuration by a radio access node.

In Example 6, the subject matter of Examples 5 may optionally include the radio communication configuration including the assignment of transmission power to channels.

In Example 7, the subject matter of any one of Examples 1-6 may optionally include the radio communication configuration including the definition of a contention window size for the contention-based radio access technology.

In Example 8, the subject matter of Example 7 may optionally include the one or more optimization parameters including a target collision rate for configuring the contention window size.

In Example 9, the subject matter of any one of Examples 7-8 may optionally include the one or more optimization parameters including a target collision rate for configuring a factor with which the contention window size increases for a user terminal in case the user terminal experiences a collision.

In Example 10, the subject matter of any one of Examples 1-9 may optionally include the one or more optimization parameters including interference thresholds.

In Example 11, the subject matter of Example 10 may optionally include the interference thresholds allowing the radio access node to evaluate a radio communication configuration by comparison of an interference experienced in response to the radio communication configuration.

In Example 12, the subject matter of any one of Examples 1-11 may optionally include the contention-based radio access technology being a radio access technology based on Carrier Sense Multiple Access/Collision Avoidance.

In Example 13, the subject matter of any one of Examples 1-12 may optionally include the network controller being configured to determine the one or more optimization parameters based on a geographic density of the radio access nodes.

In Example 14, the subject matter of any one of Examples 1-13 may optionally include the network controller being configured to receive a result of the optimization procedure and evaluate the result of the optimization procedure.

In Example 15, the subject matter of Example 14 may optionally include the network controller being configured to assign the communication channels that may be used by the radio access nodes based on the evaluation of the result of the optimization procedure.

In Example 16, the subject matter of any one of Examples 14-15 may optionally include the network controller being configured to change an assignment of the communication channels that may be used by the radio access nodes if the result of the optimization being below a predetermined threshold.

In Example 17, the subject matter of any one of Examples 1-16 may optionally include the radio access nodes including at least one of one or more base stations, one or more access points or one or more small cells.

In Example 18, the subject matter of any one of Examples 1-17 may optionally include the network controller being a Spectrum Access System controller.

In Example 19, the subject matter of Example 18 may optionally include the determiner of the Spectrum Access System controller being configured to determine the one or more optimization parameters based on a current network state to configure a communication protocol of the contention based-radio access technology.

In Example 20, the subject matter of any one of Examples 1-19 may optionally include the radio communication optimization being an iterative optimization procedure including, in each iteration, an evaluation of a configuration action based on the one or more optimization parameters.

Example 21 is a method for controlling a radio communication network as illustrated in figure 9.

In Example 22, the subject matter of Example 21 may optionally include the radio communication optimization being an optimization of providing radio access based on the contention-based radio access technology.

In Example 23, the subject matter of any one of Examples 21-22 may optionally include the radio communication optimization being a process for setting a radio communication configuration based on radio communication performance measurements.

In Example 24, the subject matter of Example 23 may optionally include the radio communication performance measurements being interference measurements.

In Example 25, the subject matter of any one of Examples 21-24 may optionally include the optimization parameters comprising values for evaluation of a radio communication configuration by a radio access node.

In Example 26, the subject matter of Example 25 may optionally include the radio communication configuration including the assignment of transmission power to channels.

In Example 27, the subject matter of any one of Examples 21-26 may optionally include the radio communication configuration including the definition of a contention window size for the contention-based radio access technology.

In Example 28, the subject matter of Example 27 may optionally include the one or more optimization parameters including a target collision rate for configuring the contention window size.

In Example 29, the subject matter of any one of Examples 27-28 may optionally include the one or more optimization parameters including a target collision rate for configuring a factor with which the contention window size increases for a user terminal in case the user terminal experiences a collision.

In Example 30, the subject matter of any one of Examples 21-29 may optionally include the one or more optimization parameters including interference thresholds.

In Example 31, the subject matter of Example 30 may optionally include the interference thresholds allowing the radio access nodes to evaluate a radio communication configuration by comparison of an interference experienced in response to the radio communication configuration.

In Example 32, the subject matter of any one of Examples 21-31 may optionally include the contention-based radio access technology being a radio access technology based on Carrier Sense Multiple Access/Collision Avoidance.

In Example 33, the subject matter of any one of Examples 21-32 may optionally include determining the one or more optimization parameters based on a geographic density of the radio access nodes.

In Example 34, the subject matter of any one of Examples 21-33 may optionally include receiving a result of the optimization procedure and evaluating the result of the optimization procedure.

In Example 35, the subject matter of Example 34 may optionally include assigning the communication channels that may be used by the radio access nodes based on the evaluation of the result of the optimization procedure.

In Example 36, the subject matter of any one of Examples 34-35 may optionally include changing an assignment of the communication channels that may be used by the radio access nodes if the result of the optimization being below a predetermined threshold.

In Example 37, the subject matter of any one of Examples 21-36 may optionally include the radio access nodes including at least one of one or more base stations, one or more access points or one or more small cells.

In Example 38, the subject matter of any one of Examples 21-37 may optionally be performed by a Spectrum Access System controller.

In Example 39, the subject matter of Example 38 may optionally include determining the one or more optimization parameters based on a current network state to configure a communication protocol of the contention based-radio access technology.

In Example 40, the subject matter of any one of Examples 21-39 may optionally include the radio communication optimization being an iterative optimization procedure including, in each iteration, an evaluation of a configuration action based on the one or more optimization parameters.

Example 41 is a radio access node as illustrated in figure 10.

In Example 42, the subject matter of Example 41 may optionally include the radio communication optimization being an optimization of providing radio access based on the contention-based radio access technology.

In Example 43, the subject matter of any one of Examples 41-42 may optionally include the radio communication optimization being a process for setting a radio communication configuration based on radio communication performance measurements.

In Example 44, the subject matter of Example 43 may optionally include the radio communication performance measurements being interference measurements.

In Example 45, the subject matter of any one of Examples 41-44 may optionally include the optimization parameters comprising values for evaluation of a radio communication configuration by the radio access node.

In Example 46, the subject matter of Example 45 may optionally include the radio communication configuration including the assignment of transmission power to channels.

In Example 47, the subject matter of any one of Examples 41-46 may optionally include the radio communication configuration including the definition of a contention window size for the contention-based radio access technology.

In Example 48, the subject matter of Example 47 may optionally include the one or more optimization parameters including a target collision rate for configuring the contention window size.

In Example 49, the subject matter of any one of Examples 47-48 may optionally include the one or more optimization parameters including a target collision rate for configuring a factor with which the contention window size increases for a user terminal in case the user terminal experiences a collision.

In Example 50, the subject matter of any one of Examples 41-49 may optionally include the one or more optimization parameters including interference thresholds.

In Example 51, the subject matter of Example 50 may optionally include the interference thresholds allowing the radio access nodes to evaluate a radio communication configuration by comparison of an interference experienced in response to the radio communication configuration.

In Example 52, the subject matter of any one of Examples 41-51 may optionally include the contention-based radio access technology being a radio access technology based on Carrier Sense Multiple Access/Collision Avoidance.

Example 53 is a method for providing radio access as illustrated in figure 11.

In Example 54, the subject matter of Example 53 may optionally include the radio communication optimization being an optimization of providing radio access based on the contention-based radio access technology.

In Example 55, the subject matter of any one of Examples 53-54 may optionally include the radio communication optimization being a process for setting a radio communication configuration based on radio communication performance measurements.

In Example 56, the subject matter of Example 55 may optionally include the radio communication performance measurements being interference measurements.

In Example 57, the subject matter of any one of Examples 54-56 may optionally include the optimization parameters comprising values for evaluation of a radio communication configuration by a radio access node.

In Example 58, the subject matter of Example 57 may optionally include the radio communication configuration including the assignment of transmission power to channels.

In Example 59, the subject matter of any one of Examples 54-58 may optionally include the radio communication configuration including the definition of a contention window size for the contention-based radio access technology.

In Example 60, the subject matter of Example 59 may optionally include the one or more optimization parameters including a target collision rate for configuring the contention window size.

In Example 61, the subject matter of any one of Examples 59-60 may optionally include the one or more optimization parameters including a target collision rate for configuring a factor with which the contention window size increases for a user terminal in case the user terminal experiences a collision.

In Example 62, the subject matter of any one of Examples 53-61 may optionally include the one or more optimization parameters including interference thresholds.

In Example 63, the subject matter of Example 62 may optionally include the interference thresholds allowing the radio access node to evaluate a radio communication configuration by comparison of an interference experienced in response to the radio communication configuration.

In Example 64, the subject matter of Example 63 may optionally include the contention-based radio access technology being a radio access technology based on Carrier Sense Multiple Access/Collision Avoidance.

According to a further example, a central network controller controls a plurality of radio access nodes to perform radio configuration optimization based on optimization parameters provided by the central network controller. The radio access nodes may provide feedback to the central network controller regarding a result of the optimization process which the central network controller may evaluate and based on which the central network controller may change a distribution of communication channels to the radio access nodes.

It should be noted that one or more of the features of any of the examples above may be combined with any one of the other examples.

While specific aspects have been described, it should be understood by those skilled in the art that various changes in form and detail may be made therein without departing from the spirit and scope of the aspects of this disclosure as defined by the appended claims. The scope is thus indicated by the appended claims and all changes which come within the meaning and range of equivalency of the claims are therefore intended to be embraced.

**Claims**

1. A network controller comprising:

   a signaling circuit configured to indicate to a plurality of radio access nodes the communication channels that may be used by the plurality of radio access nodes to provide radio access based on a contention-based radio access technology; and
   a determiner configured to determine one or more optimization parameters for radio communication optimization; wherein the signaling circuit is configured to signal the one or more optimization parameters to the plurality of radio access nodes and to request each radio access node to perform a radio communication optimization procedure based on the one or more optimization parameters.

2. The network controller of claim 1, wherein the radio communication optimization is an optimization of providing radio access based on the contention-based radio access technology.

3. The network controller of claim 1 or 2 , wherein the radio communication optimization is a process for setting a radio communication configuration based on radio communication performance measurements.

4. The network controller of claim 3, wherein the radio communication performance measurements are interference measurements.

5. The network controller of any one of claims 1 to 4, wherein the optimization parameters comprise values for evaluation of a radio communication configuration by a radio access node.

6. The network controller of claim 5, wherein the radio communication configuration includes the assignment of transmission power to channels.

7. The network controller of any one of claims 1 to 6, wherein the radio communication configuration includes the definition of a contention window size for the contention-based radio access technology.

8. The network controller of claim 7, wherein the one or more optimization parameters include a target collision rate for configuring the contention window size.

9. The network controller of claim 7 or 8, wherein the one or more optimization parameters include a target collision rate for configuring a factor with which the contention window size increases for a user terminal in case the user terminal experiences a collision.

10. The network controller of any one of claims 1 to 9, wherein the one or more optimization parameters include interference thresholds.

11. The network controller of claim 10, wherein the interference thresholds allow the radio access node to evaluate a radio communication configuration by comparison of an interference experienced in response to the radio communication configuration.

12. The network controller of any one of claims 1 to 11, wherein the contention-based radio access technology is a radio access technology based on Carrier Sense Multiple Access/Collision Avoidance.

13. A method for controlling a radio communication network comprising:

   indicating to a plurality of radio access nodes the communication channels that may be used by the plurality of radio access nodes to provide radio access based on a contention-based radio access technology;
   determining one or more optimization parameters for radio communication optimization; signaling the one or more optimization parameters to the plurality of radio access nodes; and
   requesting each radio access node to perform a radio communication optimization procedure based on the optimization parameters.

14. A radio access node comprising:

a radio access interface configured to provide radio access for user terminals using a contention-based radio access technology;

a receiver configured to receive an indication from a network controller of the communication channels the radio access node may use for providing radio access for the user terminals and configured to receive one or more optimization parameters for radio communication optimization; and

a controller configured to perform a radio communication optimization procedure based on the one or more optimization parameters;

wherein the radio access interface is configured to provide radio access for user terminals based on a result of the radio communication optimization procedure.

**15.** A method for providing radio access comprising:

receiving an indication from a network controller of the communication channels to use for providing radio access for user terminals;

receiving one or more optimization parameters for radio communication optimization;

performing a radio communication optimization procedure based on the one or more optimization parameters; and

providing radio access for user terminals using a contention-based radio access technology based on a result of the radio communication optimization procedure.

**Amended claims in accordance with Rule 137(2) EPC.**

**1.** A network controller (800) comprising:

a signaling circuit (801) configured to indicate to a plurality of radio access nodes (102) communication channels that may be used by the plurality of radio access nodes (102) to provide radio access based on a contention-based radio access technology; and

a determiner (802) configured to determine one or more optimization parameters for radio communication optimization;

wherein the signaling circuit (801) is configured to signal the one or more optimization parameters to the plurality of radio access nodes and to request each radio access node to perform a radio communication optimization procedure based on the one or more optimization parameters.

**2.** The network controller (800) of claim 1, wherein the radio communication optimization is an optimization of providing radio access based on the contention-based radio access technology.

**3.** The network controller (800) of claim 1 or 2 , wherein the radio communication optimization is a process for setting a radio communication configuration based on radio communication performance measurements.

**4.** The network controller (800) of claim 3, wherein the radio communication performance measurements are interference measurements.

**5.** The network controller (800) of any one of claims 1 to 4, wherein the optimization parameters comprise values for evaluation of a radio communication configuration by a radio access node.

**6.** The network controller (800) of claim 5, wherein the radio communication configuration includes the assignment of transmission power to channels.

**7.** The network controller (800) of any one of claims 3 to 6, wherein the radio communication configuration includes the definition of a contention window size for the contention-based radio access technology.

**8.** The network controller (800) of claim 7, wherein the one or more optimization parameters include a target collision rate for configuring the contention window size.

**9.** The network controller (800) of claim 7 or 8, wherein the one or more optimization parameters include a target collision rate for configuring a factor with which the contention window size increases for a user terminal in case the user terminal experiences a collision.

10. The network controller (800) of any one of claims 1 to 9, wherein the one or more optimization parameters include interference thresholds.

11. The network controller (800) of claim 10, wherein the interference thresholds allow the radio access node to evaluate a radio communication configuration by comparison of an interference experienced in response to the radio communication configuration.

12. The network controller (800) of any one of claims 1 to 11, wherein the contention-based radio access technology is a radio access technology based on Carrier Sense Multiple Access/Collision Avoidance.

13. A method for controlling a radio communication network comprising:

indicating to a plurality of radio access nodes the communication channels that may be used by the plurality of radio access nodes to provide radio access based on a contention-based radio access technology;
determining one or more optimization parameters for radio communication optimization;
signaling the one or more optimization parameters to the plurality of radio access nodes; and
requesting each radio access node to perform a radio communication optimization procedure based on the optimization parameters.

14. A radio access node comprising:

a radio access interface configured to provide radio access for user terminals using a contention-based radio access technology;
a receiver configured to receive an indication from a network controller of communication channels the radio access node may use for providing radio access for the user terminals and
configured to receive one or more optimization parameters for radio communication optimization; and
a controller configured to perform a radio communication optimization procedure based on the one or more optimization parameters;
wherein the radio access interface is configured to provide radio access for user terminals based on a result of the radio communication optimization procedure.

15. A method for providing radio access comprising:

receiving an indication from a network controller of the communication channels to use for providing radio access for user terminals;
receiving one or more optimization parameters for radio communication optimization;
performing a radio communication optimization procedure based on the one or more optimization parameters; and
providing radio access for user terminals using a contention-based radio access technology based on a result of the radio communication optimization procedure.

**FIG 1**

EP 3 343 971 A1

**FIG 2**

200

DIFS

PIFS

SIFS

201

Busy Medium

Defer Access

202

CW

203

Backoff

Slot_time

Next Frame

EP 3 343 971 A1

**FIG 3**

**FIG 4**

SAS — 401

CBSD1 — 402

CBSD2 — 403

Environment — 404

Environment — 405

$s_{CBSD1,t}$
$s_{CBSD1,t+1}$
$r_{CBSD1,t}$
$r_{CBSD1,t+1}$
$a_{CBSD1,t}$

$s_{CBSD2,t}$
$s_{CBSD2,t+1}$
$r_{CBSD2,t}$
$r_{CBSD2,t+1}$
$a_{CBSD2,t}$

EP 3 343 971 A1

FIG 5

FIG 6

$$\beta_0 = A_{P_{max}} / A(R_{0,k}) \quad (A)$$

$$\beta_1 = A_{P_{max}} / A(R_{1,k}) \quad (B)$$

**FIG 7**

EP 3 343 971 A1

$700$

$1 - p_c$

$701$

$702$

$703$

$p_c$

$p_c$

$p_c$

$i = 0$

$i = 1$

$i = 2$

······

$1 - p_c$

$1 - p_c$

·····

**FIG 8**

800

Signaling circuit — 801

Determiner — 802

EP 3 343 971 A1

**FIG 9**

900

Indicate to a plurality of radio access nodes the communication channels that may be used by the plurality of radio access nodes to provide radio access based on a contention-based radio access technology

901

Determine one or more optimization parameters for radio communication optimization

902

Signal the one or more optimization parameters to the plurality of radio access nodes

903

Request each radio access node to perform a radio communication optimization procedure based on the optimization parameters

904

**FIG 10**

EP 3 343 971 A1

# FIG 11

1100

Receive an indication from a network controller of the communication channels to use for providing radio access for user terminals

1101

Receive one or more optimization parameters for radio communication optimization

1102

Perform a radio communication optimization procedure based on the one or more optimization parameters

1103

Provide radio access for user terminals using a contention-based radio access technology based on a result of the radio communication optimization procedure

1104

Europäisches
Patentamt

European
Patent Office

Office européen
des brevets

# EUROPEAN SEARCH REPORT

Application Number

EP 16 20 6949

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2016/195751 A1 (INTEL CORP [US]) 8 December 2016 (2016-12-08) * paragraphs [0002], [0003], [0020] - [0031], [0037] - [00123]; figures 1-15 * | 1-15 | INV. H04W16/14 ADD. H04W24/02 H04W74/08 |
| X | WO 2016/033049 A1 (INTEL IP CORP [US]) 3 March 2016 (2016-03-03) * page 1, lines 9-20; page 2, line 26, to page 16, line 32; page 18, line 18, to page 26, line 20; figures 1-9 * | 1-15 | |
| X | WO 2016/167845 A1 (INTEL IP CORP [US]) 20 October 2016 (2016-10-20) * paragraphs [0001], [0002], [0012] - [0043], [0047] - [0096]; figures 1-8 * | 1-15 | |
| X | WO 2015/084959 A1 (MITOLA JOSEPH III [US]; DWYER JOHANNA [US]; NEEL JAMES [US]) 11 June 2015 (2015-06-11) * paragraphs [0003], [0004], [0024] - [0193]; figures 1-10 * | 1-15 | TECHNICAL FIELDS SEARCHED (IPC) H04W |

The present search report has been drawn up for all claims

| Place of search | Date of completion of the search | Examiner |
|---|---|---|
| Berlin | 27 June 2017 | Jaster, Nicole |

EPO FORM 1503 03.82 (P04C01)

## ANNEX TO THE EUROPEAN SEARCH REPORT
## ON EUROPEAN PATENT APPLICATION NO.

EP 16 20 6949

This annex lists the patent family members relating to the patent documents cited in the above-mentioned European search report.
The members are as contained in the European Patent Office EDP file on
The European Patent Office is in no way liable for these particulars which are merely given for the purpose of information.

27-06-2017

| Patent document cited in search report | | Publication date | Patent family member(s) | | Publication date |
|---|---|---|---|---|---|
| WO 2016195751 | A1 | 08-12-2016 | NONE | | |
| WO 2016033049 | A1 | 03-03-2016 | NONE | | |
| WO 2016167845 | A1 | 20-10-2016 | NONE | | |
| WO 2015084959 | A1 | 11-06-2015 | US | 2015245374 A1 | 27-08-2015 |
| | | | WO | 2015084959 A1 | 11-06-2015 |

EPO FORM P0459

For more details about this annex : see Official Journal of the European Patent Office, No. 12/82